# EUROPEAN PATENT SPECIFICATION

(11) **EP 3 003 737 B1**
(45) Date of publication and mention of the grant of the patent: **12.08.2020**
(21) Application number: 14728225.5
(22) Date of filing: 06.06.2014
(51) Int. Cl.: B60B 5/02, B60B 27/00

(54) **BEARING COMPONENT WITH COMPOSITE FLANGE**
LAGERBAUTEIL MIT VERBUNDSTOFFFLANSCH
ÉLÉMENT DE PALIER AYANT UNE COLLERETTE COMPOSITE

(30) Priority: 07.06.2013 WO PCT/EP2013/061790
(43) Date of publication of application: 13.04.2016
(73) Proprietor: Aktiebolaget SKF, 415 50 Göteborg (SE)
(72) Inventor: PETERS, Gilbert, NL-6511 DX Nijmegen (NL); SCHAAKE, Richard, NL-3551 BA Utrecht (NL); SCHRAMM, Edo, NL-2566 JS Den Haag (NL); VISSERS, Cornelius Petrus Antonius, NL-5275 BT Den Dungen (NL)
(74) Representative: Schonecke, Mitja
(86) International application number: PCT/EP2014/061886
(87) International publication number: WO 2014/195485

(56) References cited:
- EP-A1- 1 859 958
- DE-A1-102010 008 319
- JP-A- 2011 178 314

## Description

### FIELD OF THE INVENTION

The present invention relates to a flanged bearing ring, especially a flanged bearing ring of a hub bearing unit, which has a flange part that is at least partly made from a fibre-reinforced composite and a method of manufacturing such a ring.

### BACKGROUND TO THE INVENTION

In the interests of fuel economy, there is an increasing drive within the automotive industry towards weight reduction of the component parts of vehicles. A vehicle wheel bearing is one example of an automotive component where weight reduction is desirable, also in view of the fact that the wheel bearings belong to the unsprung weight of a vehicle. Raceways of the bearings need to be made from a material of sufficient hardness in order to withstand the stresses of rolling contact. Titanium and certain ceramics are materials that possess the necessary mechanical properties and are also low in weight. They are also expensive and, consequently, bearing steel is more commonly used. Bearing steel has excellent hardenability but cannot be viewed as a lightweight material. Thus, one solution for reducing the weight of a wheel bearing comprising bearing steel is to form the bearing rings from bearing steel and to form further structural elements of the wheel bearing from a fibre-reinforced polymer.

An example of such a wheel bearing is disclosed in JP2011178314. The wheel bearing has a flanged inner ring, for connecting a vehicle wheel and brake disc to the bearing, and has a flanged outer ring for connecting the bearing to e.g. a steering knuckle. Each bearing flange is made of a laminated body of a carbonfibre prepreg, formed by e.g. braiding the fibres and binding them in resin around a cylindrical surface of the bearing inner ring or outer ring.

In addition, EP1859958 discloses a wheel flange component for a motor vehicle comprising a first area formed by a cylindrical metal body and a flange -shaped second area formed by a fibre composite body. The fibre composite body has braided fibres arranged under loop formation, which are embedded in a plastic matrix. A radially outer surface of the metal body is contoured to facilitate connection with the fibre composite body.

There is still room for improvement.

### SUMMARY OF THE INVENTION

The present invention resides in a flanged bearing ring as specified in claim 1, whereby the dependent claims describe advantageous embodiments and further developments of the invention.

The flanged bearing ring comprises a flange part joined to a ring part. The flange part is at least partly made of a fibre-reinforced matrix material, which is overmoulded to the ring part. The flange part further comprises a first connection interface for enabling a component such as a vehicle wheel to be screwed or bolted to the flange part. The first connection interface comprises a plurality of bolt inserts which are embedded in the fibre-reinforced matrix material. According to the invention, at least one bolt insert is joined to the ring part by a continuous fibre tow that is wound around part of an outer surface of the bolt insert and of the ring part. Suitably, each bolt insert is joined to the ring part in this manner.

The forces acting on the flange part are introduced via the first connection interface and via a second connection interface between the flange part and the ring part. In bearing applications, e.g. wheel bearing applications, the forces concerned can be substantial. A force acting on one connection interface results in a reaction force on the other connection interface. The resulting load path runs between the connection interfaces, meaning that the flange part in a flanged bearing ring according to the invention comprises fibre-reinforcement located at, and in alignment with, the load path. Consequently, the composite part has improved strength and stiffness where it is needed most.

In a further development, additional strength and stiffness is provided in that at least a first bolt insert is joined to a second bolt insert by a continuous fibre tow that is wound around part of an outer surface of the first and second bolt inserts. Suitably, each bolt insert is joined to an adjacent bolt insert in this manner.

The continuous fibre tows which interconnect the bolt inserts and which connect the ring part to each bolt inserts may be made from carbon, glass, aramid, HBO or HDPE fibres. Advantageously, different types of fibre are selected, depending on the properties requires. For example, an aramid fibre such as Kevlar® may be selected to provide energy absorption and safety in response to impact loads. A high-modulus carbon fibre may be selected to enhance stiffness. Alternatively or additionally, a high-strength carbon fibre may be selected to increase strength and load-carrying capacity.

As will be understood, the type of fibre, the number of fibres in the continuous fibre tow and the number of loops around the ring part and a bolt insert are selected depending on the application loads in question.

The continuous fibre tows provide strength and stiffness in tension. Advantageously, the fibres are pre-tensioned during the winding process, to obtain optimal performance from the fibre properties.

In a still further development of the invention, the outer surface of one or both of the ring part and a bolt insert is provided with retaining means for holding the continuous fibre tow in place during and after the winding process, such that fibre pretension is maintained.

In one example, the ring part and/or at least one bolt insert has a groove in the outer surface with a depth and width that is essentially equal to the diameter of the fibre tow. Typically, the fibre tow has a diameter of 0.5 - 1.5 mm. During the winding process, the fibre tow is wound around the groove, which helps to keep the fibre tow in place, thereby facilitating pre-tensioning. In a further example, the outer surface of the ring part and/or of at least one bolt insert is provided with pegs that protrude from the outer surface, for guiding and retaining the fibre tows.

The winding process results in a pre-form, which is then overmoulded with the fibre-reinforced matrix material. In a preferred example, the fibre-reinforced matrix material is a long-fibre moulding compound comprising fibres with a length of 5 - 50 mm, embedded in a polymer matrix. Suitable materials for the fibres include glass, carbon, aramid, PBO (polybenzoxazole) and HDPE (high-density polyethelene). Suitable matrix materials include epoxy resin, phenolic resin, bismaleimide resin and polyimide resin.

The bolt inserts and the ring part of the flanged bearing ring are additionally joined to each other via the fibre-reinforced matrix material, which flows around the outer surface of each component during the overmoulding of the flange part. In a still further development, the outer surface of at least one of the ring part and a bolt insert is provided with a recessed portion. Preferably, the recessed portion runs continuously around a radially outer surface of the ring part or bolt insert. The fibre-reinforced matrix material will therefore flow into the recess during the moulding process, which will mechanically lock the ring part or bolt insert to the flange part in an axial direction. The robustness of the flanged bearing ring is therefore further improved.

As mentioned, the continuous fibre tows in the flange part are located in the load path between the first and second connection interfaces. The load path is an ideal site for measuring application loads. In a still further development of the invention, at least one of the continuous fibre tows that join the ring part and at least one bolt insert comprises a sensing fibre. An optical fibre comprising one or more fibre Bragg gratings is one example of a suitable sensing fibre. The sensing fibre may also be a piezoelectric fibre. Thus, the loads that act on the bearing, which loads are transferred to the bearing through the flange part, can be accurately measured in a flanged bearing ring according to the invention.

The present invention further defines a method of manufacturing a flanged bearing ring comprising a flange part that is at least partly made of a fibre-reinforced matrix material, which is overmoulded to a joining surface on a ring part of the bearing, wherein the flange part comprises a plurality of bolt inserts embedded in the overmoulded material. The method comprises steps of:
i. arranging the plurality of bolt inserts at a radial distance from the joining surface of the ring part;
ii. winding a continuous fibre tow around part of the joining surface and around part of a radially outer surface of at least one bolt insert, thereby creating a pre-form in which the ring part and the at least one bolt insert connected via one or more loops of the continuous fibre tow; and
iii. overmoulding the fibre-reinforced matrix material to the pre-form.

Preferably, the step of winding comprises joining each bolt insert to the ring part via one or more loops of a continuous fibre tow.

The step of winding may further comprise joining at least a first bolt insert to a second bolt insert by looping a continuous fibre tow around part of the outer surface of the first and second bolt insert.

In a further development, the joining surface of the ring part and/or the radially outer surface of at least one bolt insert is provided with retaining means, and the step of winding comprises using the retaining means to pretension the continuous fibre tow. The retaining means may be formed by a surface groove with a width and depth essentially equal to the diameter of the fibre tow, or by one or more pegs that protrude from the surface.

After the step of winding, the pre-form is placed in a mould. Advantageously, the ring part and each bolt insert are used in the step of overmoulding to support and precisely locate the pre-form within the mould. This also helps to ensure that fibre pretension is maintained.

Thus, a robust and lightweight flanged bearing ring may be manufactured using the method of the invention.

Other advantageous of the present invention will become apparent from the details description and accompanying drawings.

### DRAWINGS

The invention will now be described further, with reference to the following Figures, in which:

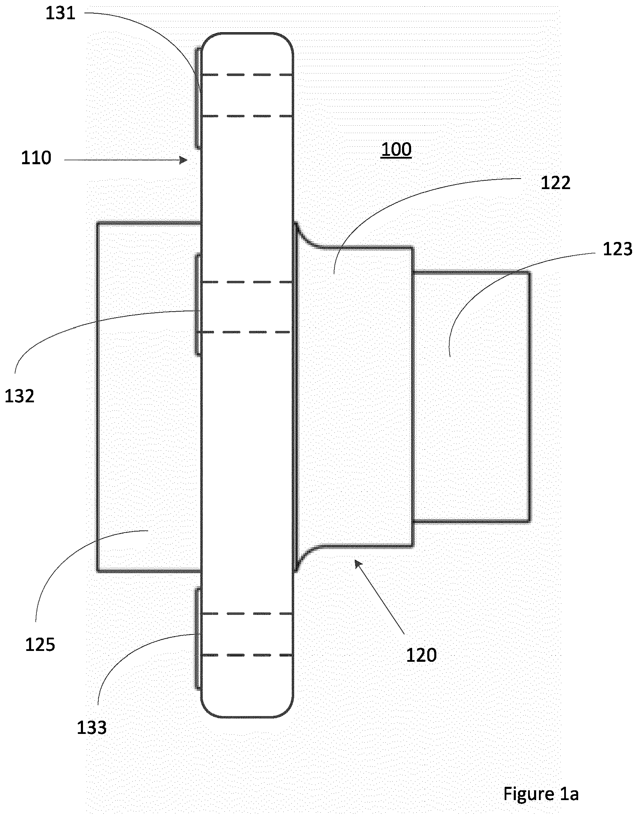

- Fig. 1a: shows a side view of a flanged bearing ring according to the invention, comprising a flange part overmoulded to a ring part;

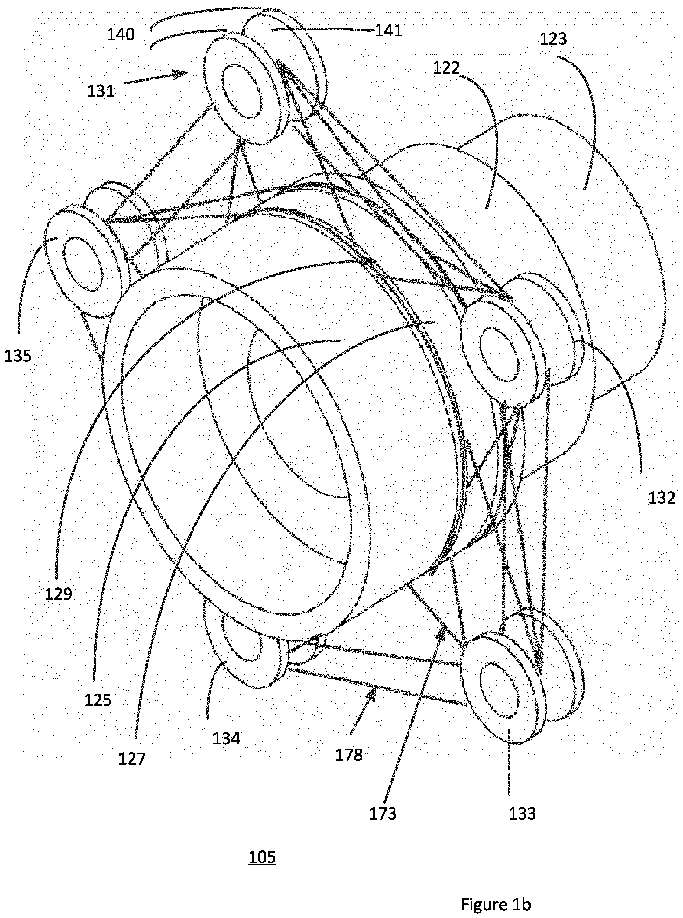

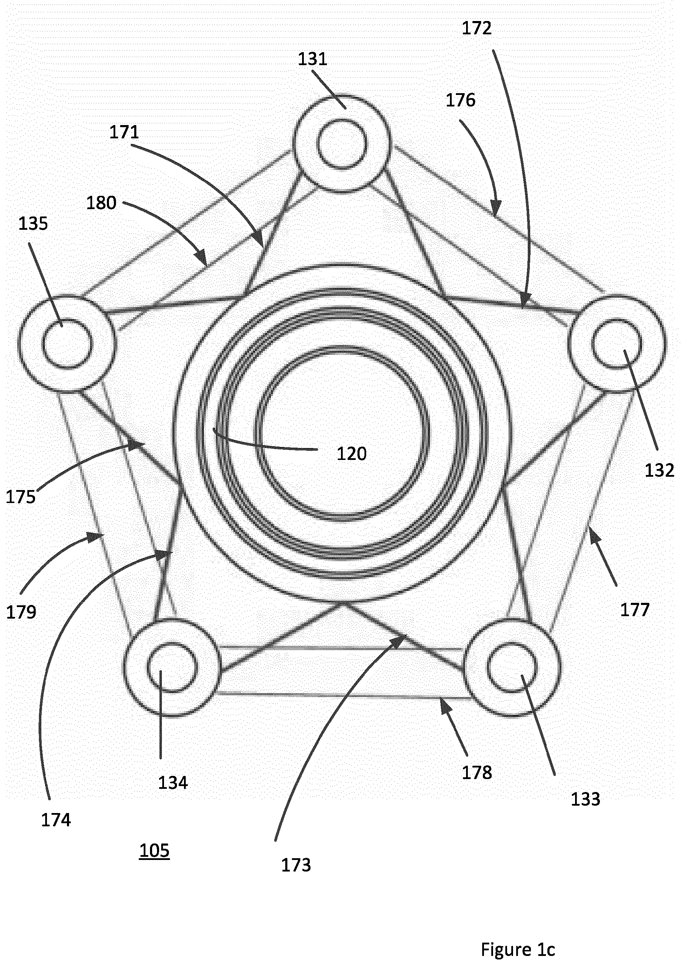

- Fig. 1b and 1c: respectively show a perspective view and a front view of a preform of the flanged bearing ring from 1a, prior to overmoulding;

### DETAILED DESCRIPTION

A hub bearing unit is an example of a bearing that may comprise at least one flanged bearing ring. In some examples, the inner ring of the hub bearing unit has a wheel mounting flange for mounting a wheel rim and a brake disc to the bearing. The outer ring may also comprise a flange for attaching the bearing to e.g. a steering knuckle. In other examples, adapted for outer ring rotation, the bearing outer ring comprises a wheel mounting flange.

An example of a flanged bearing ring according to the invention is depicted in Figure 1a. The flanged bearing ring 100 will form part of a hub bearing unit adapted for inner ring rotation, and comprises a radially extending wheel mounting flange 110 and an axially extending inner ring part 120. The ring part is made of bearing steel in the depicted example and comprises a raceway portion 122 with a hardened surface for receiving a row of rolling elements. The bearing will further comprise a separate inner ring (not shown) that is mounted on an axially inner portion 123 of the ring part. In addition, the ring part 120 comprises a spigot portion 125, to facilitate centring of a wheel rim that is mounted to the flange part 110 of the bearing ring 100. The flange part is at least partly made of a fibre-reinforced matrix material.

In conventional wheel bearing units, the flanged inner and/or outer ring is made entirely of bearing steel and bolt holes for attaching the brake disc and wheel rim are machined into the flange. When the flange is made of fibre-reinforced matrix material, the bolt holes are suitably formed by bolt inserts that are overmoulded with the fibre-reinforced material.

As can be more clearly seen in Figures 1b and 1c, the flange 110 has five bolt inserts 131, 132, 133, 134, 135 arranged at regular intervals, at a radial distance from the ring part 120. The bolt inserts are made of a metal such as steel and have a tubular geometry provided with an internal thread. The flange part 120 is made of a long-fibre moulding compound that is overmoulded to a joining surface 127 on the ring part 120. The joining surface is arranged between the raceway portion 122 and the spigot portion 125. During the overmoulding process, the bolt inserts 131, 132, 133, 134, 135 become embedded in the flange part 110 and are thus joined to the ring part 120 via the moulding compound.

According to the invention, the ring part is additionally joined to at least one of the bolt inserts by a continuous fibre tow that is wound around a section of the joining surface 127 and around a section of a radially outer surface of the at least one bolt insert. Preferably, as shown in Figures 1b and 1c, the ring part 120 is joined in this manner to each of the bolt inserts.

A first continuous fibre tow 171 is looped around a section of the radially outer surface of the first bolt insert 131 and around a section of the ring part joining surface 127. Second 172, third 173, fourth 174 and fifth 175 continuous fibre tows respectively join the second 132, third 133, fourth 134 and fifth 135 bolt inserts to the ring part 120 in a similar manner.

The loads on the vehicle wheel are transmitted to the hub bearing unit through the flange 110. The bolt inserts constitute load introduction points, and the load is then transmitted to the ring part 120 of the bearing through the joining surface 127. Therefore, the coninuous fibre tows, 171, 172, 173, 174 and 175 follow the load path, which provides the flange 110 with excellent strength and stiffness.

The flange 110 is provided with further strength and stifness in that adjacent bolt inserts are also joined to each other by a continuous fiber tow. A sixth continuous fibre tow 176 is looped around a section of the radially outer surface of the first and second bolt inserts 131, 132. A seventh continuous fibre tow 177 joins the second and third bolt inserts 132, 133 in the same manner. An eight continuous fibre tow 178 joins the third and fourth bolt inserts 133, 134 in the same manner. A ninth continuous fibre tow 179 joins the fourth and fifth bolt inserts 134, 135 in the same manner. Finally, a tenth continuous fibre tow 180 joins the fifth and first bolt inserts 135, 131 in the same manner.

The winding of the continuous fibre tows takes place prior to moulding of the flange 110. A pre-form is thus produced, which is then overmoulded with the long-fibre moulding compound. Figures 1b and 1c respectively show a perspective view and a front view of the pre-form 105.

The ring part 120 is fixed on a rig (not shown). The first 131, second 132, third 133, fourth 134 and fifth bolt inserts (135) are likewise fixed to the rig, at locations corresponding to the bolt holes on a vehicle wheel.

The pre-form is made using e.g. an automated fibre placement machine or robot. Advantageously, the fibre tows are pretensioned during the winding process. To assist fibre-pretensioning and to help guide and retain the fibre tows, the joining surface 127 of the ring part and the radially outer surface of each bolt insert are preferably provided with retention means. In the example of Fig. 1b, one or more grooves 129 with a depth and width essentially equal to the diameter of the fibre tows are provided in the joining surface 127 of the ring part and in the radially outer surface of each bolt insert. The continuous fibre tows are then provided in these grooves during the winding process.

In the depicted example, the continuous fibre tows comprise dry carbon fibres. These fibres will become impregnated with matrix material that is absorbed from the long-fibre moulding compound, when the flange part 110 is overmoulded. It is also possible to use pre-impregnated fibres, which may be cured prior to placing the pre-form in the mould or which may be cured simultaneously with the moulding compound.

When the pre-form is finished, it is placed in a mold. Suitably, the ring part 120 and each bolt insert 131, 132, 133, 134, 135 are precisely located and fixed to the mould during the moulding process. This helps to maintain the pretension in the fibre tows, which was achieved during the winding process. Maintaining fibre pretension is advantageous in terms of optimizing the fibre properties and thus the performance of the finished component.

To facilitate the moulding of the flange part 110 to the ring part 120, the joining surface 127 is preferably provided with an indentation or a continous groove that is larger than the one or more fibre-retaining grooves 129. The moulding compound will flow into this indentation, to provide mechanical locking between the flange part and ring part in an axial direction.

Each bolt insert preferably also has such an indentation for mechanically locking the bolt insert in an axial direction within the overmoulded flange 110. In the example depicted in Fig. 1b, each bolt insert has the shape of a reel. Taking the first bolt insert 131 as an example, a radially extending rim 140 is provided at each axial end of the insert. The moulding compound flows around the radial surface 141 between the rims 140, thereby locking the bolt insert 131 in a radial direction and an axial direction relative to the flange 110.

Thus, a flanged bearing ring according to the invention is a lightweight component which has sufficient strength and stiffness to withstand high application loads.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims.

## Claims

1. Flanged bearing ring (100) comprising a flange part (110) joined to a ring part (120), wherein
• the flange part (110) is at least partly made of a fibre-reinforced matrix material, which is overmoulded to the ring part, and
• the flange part comprises a plurality of connection points in the form of bolt inserts (131, 132, 133, 134, 135) which are embedded in the fibre-reinforced matrix material;
**characterized in that**
at least one of the bolt inserts is joined to the ring part (120) by a continuous fibre tow (171, 172, 173, 174, 175) that is wound around part of a radially outer surface (141) of the at least one bolt insert and around part of a radially outer surface (127) of the ring part (120).

2. Flanged bearing ring according to claim 1, wherein each bolt insert (131, 132, 133, 134, 135) is joined to the ring part by a continuous fibre tow (171, 172, 173, 174, 175) that is wound around part of an outer surface of the bolt insert and of the ring part.

3. Flanged bearing ring according to claim 1 or 2, wherein at least one bolt insert (131) is joined to a further insert (132) by a continuous fibre tow (176) that is wound around part of the radially outer surface (141) of the first and second bolt inserts.

4. Flanged bearing ring according to any preceding claim, wherein the radially outer surface (141) of the at least one bolt insert and/or the radially outer surface (127) of the ring part (120) is provided with retaining means for guiding and retaining the continuous fibre tow.

5. Flanged bearing ring according to claim 4, wherein the retaining means are formed by one or more grooves (129) having a depth and width essentially equal to a diameter of the continuous fibre tow (171, 172, 173, 174, 175, 176, 177, 178, 179, 180).

6. Flanged bearing ring according to claim 4, wherein the retaining means are formed by one or more pegs which protrude from the radially outer surface of the at least one bolt insert (131, 132, 133, 134, 135) and/or of the ring part (120).

7. Flanged bearing ring according to any preceding claim, wherein the continuous fibre tow which joins one of the bolt inserts to the ring part comprises a sensing fibre for measuring a load on the flanged bearing ring.

8. Flanged bearing ring to any preceding claim, wherein the fibre-reinforced matrix material is a long fibre moulding compound.

9. Flanged bearing ring according to any preceding claim, wherein the radially outer surface of a bolt insert (131, 132, 133, 134, 135) and/or of the ring part (120) comprises a recessed portion into which the overmoulded fibre-reinforced matrix material flows, for mechanically locking the radially outer surface (127, 141) to the fibre-reinforced matrix material.

10. A method of manufacturing a flanged bearing ring (100) comprising a flange part (110) that is at least partly made of a fibre-reinforced matrix material, which is overmoulded to a joining surface (127) on a ring part (120) of the bearing, wherein the flange part comprises a plurality of bolt inserts (131, 132, 133, 134, 135) embedded in the overmoulded material, wherein the method comprises steps of:
i. arranging the plurality of bolt inserts at a radial distance from the joining surface (127) of the ring part;
ii. winding a continuous fibre tow (171, 172, 173, 174, 175) around part of the joining surface (127) and around part of a radially outer surface (141) of at least one bolt insert (131), thereby creating a pre-form (105) in which the ring part (120) and the at least one bolt insert (131) are connected via one or more loops of the continuous fibre tow (171);
iii. overmoulding the fibre-reinforced matrix material to the pre-form (105).

11. The method of claim 10, wherein the step of winding comprises joining each bolt insert (131, 132, 133, 134, 135) to the ring part (120) via one or more loops of a continuous fibre tow (171, 172, 173, 174, 175).

12. The method of claim 10 or 11, wherein the step of winding further comprises joining at least a first bolt insert (131) to a second bolt insert (132) by looping a continuous fibre tow (176, 177, 178, 179, 180) around part of the radially outer surface (141) of the first and second bolt inserts.

13. The method of any of claims 10 -12 wherein, the joining surface (127) of the ring part (120) and/or the radially outer surface (141) of at least one bolt insert is provided with retaining means (129), and the step of winding comprises using the retaining means to pretension the continuous fibre tow during the winding.

14. The method of claim 13, wherein the retaining means are formed by a surface groove (129) with a width and depth essentially equal to the diameter of the continuous fibre tow (171, 172, 173, 174, 175), or by one or more pegs that protrude from the surface.

15. The method of any of claims 10 - 14, wherein the ring part (120) and each bolt insert (131, 132, 133, 134, 135) are used in the step of overmoulding to support and precisely locate the pre-form (105) within the mould.

## Patentansprüche

1. Flanschlagerring (100), einen Flanschteil (110), der mit einem Ringteil (120) verbunden ist, umfassend, wobei
• der Flanschteil (110) zumindest teilweise aus einem faserverstärkten Matrixmaterial besteht, das auf den Ringteil aufgeformt ist, und
• der Flanschteil mehrere Verbindungspunkte in Form von Bolzeneinsätzen (131, 132, 133, 134, 135) umfasst, die in das faserverstärkte Matrixmaterial eingelassen sind;
**dadurch gekennzeichnet, dass**
mindestens einer der Bolzeneinsätze durch einen durchgehenden Faserstrang (171, 172, 173, 174, 175), der um einen Teil einer radialen Außenfläche (141) des mindestens einen Bolzeneinsatzes und um einen Teil einer radialen Außenfläche (127) des Ringteils (120) gewickelt ist, mit dem Ringteil (120) verbunden ist.

2. Flanschlagerring nach Anspruch 1, wobei jeder Bolzeneinsatz (131, 132, 133, 134, 135) durch einen durchgehenden Faserstrang (171, 172, 173, 174, 175), der um einen Teil einer Außenfläche des Bolzeneinsatzes und des Ringteils gewickelt ist, mit dem Ringteil verbunden ist.

3. Flanschlagerring nach Anspruch 1 oder 2, wobei mindestens ein Bolzeneinsatz (131) durch einen durchgehenden Faserstrang (176), der um einen Teil der radialen Außenfläche (141) des ersten und zweiten Bolzeneinsatzes gewickelt ist, mit einem weiteren Einsatz (132) verbunden ist.

4. Flanschlagerring nach einem der vorstehenden Ansprüche, wobei die radiale Außenfläche (141) des mindestens einen Bolzeneinsatzes und/oder die radiale Außenfläche (127) des Ringteils (120) mit Halteeinrichtungen zum Führen und Halten des durchgehenden Faserstrangs versehen ist.

5. Flanschlagerring nach Anspruch 4, wobei die Halteeinrichtungen durch eine oder mehrere Nuten (129) ausgebildet sind, die eine Tiefe und Breite aufweisen, die im Wesentlichen dem Durchmesser des durchgehenden Faserstrangs (171, 172, 173, 174, 175, 176, 177, 178, 179, 180) gleicht.

6. Flanschlagerring nach Anspruch 4, wobei die Halteeinrichtungen durch einen oder mehrere Stifte ausgebildet sind, die von der radialen Außenfläche des mindestens einen Bolzeneinsatzes (131, 132, 133, 134, 135) und/oder des Ringteils (120) vorstehen.

7. Flanschlagerring nach einem der vorstehenden Ansprüche, wobei der durchgehende Faserstrang, der einen der Bolzeneinsätze mit dem Ringteil verbindet, eine Sensorfaser umfasst, um eine Last auf den Flanschlagerring zu messen.

8. Flanschlagerring nach einem der vorstehenden Ansprüche, wobei das faserverstärkte Matrixmaterial ein langfaseriger Formungsverbundstoff ist.

9. Flanschlagerring nach einem der vorstehenden Ansprüche, wobei die radiale Außenfläche eines Bolzeneinsatzes (131, 132, 133, 134, 135) und/oder des Ringteils (120) einen ausgesparten Abschnitt umfasst, in den das aufgeformte faserverstärkte Matrixmaterial strömt, um die radiale Außenfläche (127, 141) mechanisch am faserverstärkten Matrixmaterial zu fixieren.

10. Verfahren zum Herstellen eines Flanschlagerrings (100), einen Flanschteil (110) umfassend, der zumindest teilweise aus einem faserverstärkten Matrixmaterial besteht, das auf eine Verbindungsfläche (127) auf einem Ringteil (120) des Lagers aufgeformt ist, wobei der Flanschteil mehrere Bolzeneinsätze (131, 132, 133, 134, 135) umfasst, die in die das aufgeformte Material eingelassen sind, wobei das Verfahren die folgenden Schritte umfasst:
i. Anordnen der mehreren Bolzeneinsätze in einem radialen Abstand von der Verbindungsfläche (127) des Ringteils;
ii. Wickeln eines durchgehenden Faserstrangs (171, 172, 173, 174, 175) um einen Teil der Verbindungsfläche (127) und um einen Teil einer radialen Außenfläche (141) mindestens eines Bolzeneinsatzes (131) und dadurch Erzeugen eines Vorformlings (105), in dem der Ringteil (120) und der mindestens eine Bolzeneinsatz (131) über eine oder mehrere Schlaufen des durchgehenden Faserstrangs (171) verbunden sind;
iii. Aufformen des faserverstärkten Matrixmaterials auf den Vorformling (105).

11. Verfahren nach Anspruch 10, wobei der Schritt des Wickelns das Verbinden jedes Bolzeneinsatzes (131, 132, 133, 134, 135) mit dem Ringteil (120) über eine oder mehrere Schlaufen eines durchgehenden Faserstrangs (171, 172, 173, 174, 175) umfasst.

12. Verfahren nach Anspruch 10 oder 11, wobei der Schritt des Wickelns ferner das Verbinden mindestens eines ersten Bolzeneinsatzes (131) mit einem zweiten Bolzeneinsatz (132) durch Umwickeln eines durchgehenden Faserstrangs (176, 177, 178, 179, 180) um einen Teil der radialen Außenfläche (141) des ersten und zweiten Bolzeneinsatzes umfasst.

13. Verfahren nach einem der Ansprüche 10-12, wobei die Verbindungsfläche (127) des Ringteils (120) und/oder der radialen Außenfläche (141) mindestens eines Bolzeneinsatzes mit Halteeinrichtungen (129) versehen ist und der Schritt des Wickelns das Verwenden der Halteinrichtungen, um den durchgehenden Faserstrang beim Wickeln vorzuspannen, umfasst.

14. Verfahren nach Anspruch 13, wobei die Halteeinrichtungen durch eine Oberflächennut (129) mit einer Breite und Tiefe, die im Wesentlichen dem Durchmesser des durchgehenden Faserstrangs (171, 172, 173, 174, 175) gleicht, oder durch einen oder mehrere Stifte, die von der Oberfläche vorstehen, ausgebildet sind.

15. Verfahren nach einem der Ansprüche 10-14, wobei der Ringteil (120) und jeder Bolzeneinsatz (131, 132, 133, 134, 135) in dem Schritt des Aufformens verwendet werden, um den Vorformling (105) innerhalb der Form zu tragen und präzise anzuordnen.

## Revendications

1. Bague de palier à collerette (100) comprenant une partie collerette (110) reliée à une partie bague (120), dans laquelle
- la partie collerette (110) est au moins partiellement faite d'une matière de matrice renforcée de fibres, qui est surmoulée sur la partie bague, et
- la partie collerette comprend une pluralité de points de connexion sous la forme d'inserts de boulon (131, 132, 133, 134, 135) qui sont intégrés dans la matière de matrice renforcée de fibres ;
**caractérisée en ce que**
au moins un des inserts de boulon est relié à la partie bague (120) par une mèche de fibre continue (171, 172, 173, 174, 175) qui est enroulée autour d'une partie d'une surface radialement extérieure (141) dudit au moins un insert de boulon et autour d'une partie d'une surface radialement extérieure (127) de la partie bague (120) .

2. Bague de palier à collerette selon la revendication 1, dans laquelle chaque insert de boulon (131, 132, 133, 134, 135) est relié à la partie bague par une mèche de fibre continue (171, 172, 173, 174, 175) qui est enroulée autour d'une partie d'une surface extérieure de l'insert de boulon et de la partie bague.

3. Bague de palier à collerette selon la revendication 1 ou 2, dans laquelle au moins un insert de boulon (131) est relié à un insert supplémentaire (132) par une mèche de fibre continue (176) qui est enroulée autour d'une partie de la surface radialement extérieure (141) du premier et du deuxième insert de boulon.

4. Bague de palier à collerette selon l'une quelconque des revendications précédentes, dans laquelle la surface radialement extérieure (141) dudit au moins un insert de boulon et/ou la surface radialement extérieure (127) de la partie bague (120) sont munies de moyens de retenue pour guider et retenir la mèche de fibre continue.

5. Bague de palier à collerette selon la revendication 4, dans laquelle les moyens de retenue sont formés par une ou plusieurs rainures (129) ayant une profondeur et une largeur essentiellement égales à un diamètre de la mèche de fibre continue (171, 172, 173, 174, 175, 176, 177, 178, 179, 180).

6. Bague de palier à collerette selon la revendication 4, dans laquelle les moyens de retenue sont formés par une ou plusieurs chevilles qui dépassent de la surface radialement extérieure dudit au moins un insert de boulon (131, 132, 133, 134, 135) et/ou de la partie bague (120).

7. Bague de palier à collerette selon l'une quelconque des revendications précédentes, dans laquelle la mèche de fibre continue qui relie un des inserts de boulon à la partie bague comprend une fibre de détection pour mesurer une charge sur la bague de palier à collerette.

8. Bague de palier à collerette selon l'une quelconque des revendications précédentes, dans laquelle la matière de matrice renforcée de fibres est un composé de moulage à fibres longues.

9. Bague de palier à collerette selon l'une quelconque des revendications précédentes, dans laquelle la surface radialement extérieure d'un insert de boulon (131, 132, 133, 134, 135) et/ou de la partie bague (120) comprend une partie en retrait dans laquelle la matière de matrice renforcée de fibres surmoulée s'écoule, pour verrouiller mécaniquement la surface radialement extérieure (127, 141) à la matière de matrice renforcée de fibres.

10. Procédé de fabrication d'une bague de palier à collerette (100) comprenant une partie collerette (110) qui est au moins partiellement faite d'une matière de matrice renforcée de fibres, qui est surmoulée sur une surface de liaison (127) d'une partie bague (120) du palier, dans lequel la partie collerette comprend une pluralité d'inserts de boulon (131, 132, 133, 134, 135) intégrés dans la matière surmoulée, dans lequel le procédé comprend les étapes suivantes :
i. l'agencement de la pluralité d'inserts de boulon à une distance radiale de la surface de liaison (127) de la partie bague ;
ii. l'enroulement d'une mèche de fibre continue (171, 172, 173, 174, 175) autour d'une partie de la surface de liaison (127) et autour d'une partie d'une surface radialement extérieure (141) d'au moins un insert de boulon (131), ce qui permet de créer une préforme (105) dans laquelle la partie bague (120) et ledit au moins un insert de boulon (131) sont connectés par l'intermédiaire d'une ou de plusieurs boucles de la mèche de fibre continue (171) ;
iii. le surmoulage de la matière de matrice renforcée de fibres sur la préforme (105).

11. Procédé de la revendication 10, dans lequel l'étape d'enroulement comprend la liaison de chaque insert de boulon (131, 132, 133, 134, 135) à la partie bague (120) par l'intermédiaire d'une ou de plusieurs boucles d'une mèche de fibre continue (171, 172, 173, 174, 175) .

12. Procédé de la revendication 10 ou 11, dans lequel l'étape d'enroulement comprend en outre la liaison d'au moins un premier insert de boulon (131) à un deuxième insert de boulon (132) par formation d'une boucle d'une mèche de fibre continue (176, 177, 178, 179, 180) autour d'une partie de la surface radialement extérieure (141) du premier et du deuxième insert de boulon.

13. Procédé de l'une quelconque des revendications 10 à 12, dans lequel la surface de liaison (127) de la partie bague (120) et/ou la surface radialement extérieure (141) d'au moins un insert de boulon sont munies de moyens de retenue (129), et l'étape d'enroulement comprend l'utilisation des moyens de retenue pour prétendre la mèche de fibre continue pendant l'enroulement.

14. Procédé de la revendication 13, dans lequel les moyens de retenue sont formés par une rainure de surface (129) ayant une largeur et une profondeur essentiellement égales au diamètre de la mèche de fibre continue (171, 172, 173, 174, 175), ou par une ou plusieurs chevilles qui dépassent de la surface.

15. Procédé de l'une quelconque des revendications 10 à 14, dans lequel la partie bague (120) et chaque insert de boulon (131, 132, 133, 134, 135) sont utilisés dans l'étape de surmoulage pour soutenir et localiser précisément la préforme (105) dans le moule.
